# EUROPEAN PATENT APPLICATION

(11) **EP 3 406 690 A1**
(43) Date of publication of application: **28.11.2018**
(21) Application number: 16718598.2
(22) Date of filing: 22.01.2016
(51) Int. Cl.: C09K 5/06

(54) **PROCESS FOR PRODUCING NANOENCAPSULATED TEMPERATURE REGULATING AGENT (NTRA) BY INFERFACIAL POLYMERIZATION**

(71) Applicant: Natura Cosméticos S.A., 05106-000 São Paulo - SP (BR); Instituto De Pesquisas Tecnológicas Do Estado De São Paulo S.A. - IPT, 05508-901 São Paulo - SP (BR)
(72) Inventor: BUCCHI ALENCASTRE MOROZ, Juliana, 05106-000, Sao Paulo, SP (BR); CHU YAN LING OKUDA, Jenny, 05106-000, Sao Paulo, SP (BR); NETO PEREIRA CERIZE, Natalia, 05508-900 São Paulo - SP (BR); LANIGRA GUIMARÃES, Kleber, 05508-900 São Paulo - SP (BR); MARIM DE OLIVEIRA, Adriano, 05508-900 São Paulo - SP (BR); AMBROZIO ZANIN, Maria Helena, 05508-900 São Paulo - SP (BR); ARAGÃO HOROIWA, Thaís, 05508-900 São Paulo - SP (BR); HESPPORTE IWAMOTO, Leilane, 05508-900 São Paulo - SP (BR)
(74) Representative: Abel & Imray
(86) International application number: PCT/BR2016/050009
(87) International publication number: WO 2017/124162

(57) **Abstract**

The present invention relates to a process for producing NTRA by interfacial polymerisation of a cyanoacrylate monomer at the interface between the mixture of organic material and colloidal oxide nanoparticles with the aqueous medium, in the form of an emulsion, the colloidal oxide nanoparticles being optionally included. The NTRA synthetis process comprises six successive processing steps: a) solubilising the organic material and dispersing the colloidal oxide nanoparticles in a solvent, the organic phase; b) pre-emulsifying the organic phase in a solution of water and emulsifiers; c) diffusing this pre-emulsion in an aqueous phase containing emulsifiers; d) distilling the solvents; and finally e) polymerising the monomer and forming the shell of the nanoencapsulated products, with f) optionally drying the product. The resultant NTRA can be in the form of a colloidal dispersion in an aqueous medium or in the form of nanoparticles. The NTRA produced by this process makes it possible to obtain various types of products for use in the industries of cosmetics, pharmaceuticals, medical equipment, prostheses, textiles, paints, coatings, composites, packaging, civil engineering, electrical or electronic equipment, automobile and paper industries.

## Description

### FIELD OF ACTUATION

The invention belongs to the sector of materials for the production of heat or cold by chemical reactions other than combustion, the thermal effect being accompanied by a change in the liquid physical state to the solid state and vice-versa, containing organic and inorganic active ingredients that promote temperature regulation by using two physical principles associated in a same nanostructure of the nanocapsule type, namely: the change in phase by melting/solidification of an organic material and the reflection of the infrared radiation present in the white light that falls onto the surface containing the nanostructured temperature regulating agent.

The process relates to interfacial polymerization of monomer of the cyanoacrylate type on the surface between the mixture of organic material and the colloidal oxide nanoparticles with the aqueous medium, in the form of an emulsion. Since this is an interfacial polymerization, the nanostructure formed is characterized by being of the shell-core type, the shell being polymeric and the core containing the mixture of materials that regulate the temperature.

This temperature regulating agent can be applied in generating products related to the areas of cosmetics, pharmaceutics, medical equipment, prostheses, textiles, pains, coatings, composites, packages, civil construction, electric or electronic equipment, automotive industry and paper-making.

### PRIOR ART

The search for better quality of life for the human being is a goal that permeates almost all the activities of the industry and trade. In this search for more favorable living conditions, one points out the comfort provided by buildings, clothes, vehicles and many other products that promote protection and decrease stress and fatigue in the daily activities of man. In the scenario of variables that exist in the concept of comfort for man, the search for better conditions in thermal comfort stands out, which is represented by methods or products that minimize the variations in temperature in the environments, objects, clothes, or even applied to the skin itself. The thermal comfort is strongly related to temperature, humidity, air velocity and the incidence of sunshine, besides the influence of rainfall, vegetation, permeability of the soil, surface or underground waters and topography.

There are a number of methods for controlling the heat-exchange processes in order to provide thermal comfort, and in many cases there is a need for sources of electric energy to drive the cooling systems or heat exchangers. An alternative to temperature control is the use of materials that absorb or release heat related to their melting or solidifying process, which is related to the heat exchange processes by conduction or by convection, or the use of solid particles that reflect infrared radiation preventing it from coming into contact with the objects or bodies and, thus, preventing them from heating up, or else preventing them from losing radiation of this type, which results in their cooling.

Materials that can be used as temperature regulators, based on the melting/solidifying process (latent heat) may be of the organic or inorganic type, wherein for organic materials, waxes and paraffin stand out, and for inorganic materials a few salts or eutectic mixtures of salts and water stand out. However, in different applications in which these temperature regulating materials are employed, they need to be encapsulated so that during the melting process they will not spread through the substrate on which they are applied or permeate through the skin in the case of cosmetic products, and so they can keep their main characteristic, which is that of absorbing and releasing heat in a cyclic manner with the same thermal efficiency of melting and solidification enthalpy.

A few documents demonstrated the possibility and feasibility of using these materials to regulate temperature or store renewable energy in a simple and economical manner, among which stands out US 20070224899 (Particulate compositions and their manufacture), which presents a method and composition for generating capsules containing hydrophobic material inside them, among which are materials that undergo melting/solidification as a mechanism of storing or regulating thermal energy, as for example, waxes and paraffin. Further, other documents that stand out are: US 20090236079 (Nanoparticle-enhanced phase change materials (NEPCM) with great potential for improved thermal energy storage) and US 7919184 (Hybrid nanoparaticles) and KR 20130067128 (Complex particles of phase change materials and conductive filler for a heat control material and its preparing method), where one presents the use of organic materials encapsulated in polymeric micro/nanocapsules, and documents US 20090236079 (Nanoparticle-enhanced phase change materials (NEPCM) with great potential for improved thermal energy storage) and US 7919184 (Hybrid nanoparticles) as energy storage agent as a function of their melting/solidification and the association of metallic nanoparticles to increase the rate of transfer of heat between nanocapsules and the environment or the surface on which they are applied.

The use of particles as a means to reflect infrared radiation is already known and can be exemplified by the paper of Bendiganavale, Ashwini K. and Malshe, Vinod C. (INFRARED REFLECTIVE INORGANIC PIGMENTS, Recent Patents on Chemical Engineering, 2008, 1, 67-79) and in document US 2013/0216834 (Zinc oxide and cosmetic). In this document one describes the use of zinc-oxide microparticles for the production of cosmetics, which exhibit different functions, among which is reflectance of infrared radiation.

The prior art presents documents that show processes of constructing particles filled with PCMs, which might be used in storing thermal energy; however, none of them mentions the possibility of constructing nanoparticles containing a mixture of PCM and colloidal oxide, which together impart absorption/release of energy for the purpose of regulating the temperature of a surface and with the presence of colloidal oxide in the same nanostructure with the function of reflecting infrared radiations. One also points out the synthesis of the multifunctional nanostructure, since the latter has been prepared by a polymerization mechanism that takes place in the interface of the drop of PCM/colloidal oxide and the water, employing monomers that polymerize without addition of chemical, thermal starters or by radiation, enabling operations at temperatures lower than 60 °C and without the presence of chemical components from polymerization starters that can be sources of contamination ion the products generated with this technology.

### SUMMARY OF THE INVENTION

The present process for producing a nanoencapsulated temperature regulating agent (artn/ntra) via interfacial polymerization relates to the obtainment process of NTRA by interfacial polymerization of cyanoacrylate type monomer in the interface between the mixture of organic material and the colloidal oxide nanoparticles with the aqueous medium, in the form of an emulsion. Since this is an interfacial polymerization, the nanostructure formed is characterized by being of the shell-core type, the shell being polymeric and the core containing the mixture of the temperature regulating materials.

The synthesis of NTRA comprises six consecutive processing phases for generating the nanoencapsulates, namely: step a) solubilizing the organic material and dispersion of the colloidal oxide nanoparticles in a solvent, called organic phase; step b) pre-emulsifying the organic phase in a solution of water and emulsifiers; step c) diffusing this pre-emulsion in an aqueous phase containing emulsifiers; step d) distilling the solvents; and, finally, step e) polymerizing the monomer and forming the shell of the nanoencapsulates, there being an optional step f) of drying the product. Since the NTRA obtained is on nanometric scale, this imparts to it a greater efficiency in the heat transfer processes and surface covering power, guaranteeing greater reflection of infrared radiation.

The NTRA generated may be in the form of a colloidal dispersion in an aqueous medium or in the form of nanoparticles, in case the aqueous dispersion of the NTRAs is subjected to the optional drying step, such as spray-drying, fluid-bed drying, filtration, lyofilization, centrifugation, among others. Due to the versatility and different forms of presentation, the NTRA obtained by this process enables one to obtain different types of products for application in the industries of cosmetics, pharmaceutics, medical equipment, prostheses, textiles, paints, coatings, composites, packages, civil construction, electric or electronic equipment, automobile industry and paper-making.

### DESCRIPTION OF THE FIGURES

Figure 1 shows an illustrative scheme of the mechanism of action obtained for the nanoencapsulated temperature regulating agent, showing the polymeric shell (1) and the PCM core with UV-radiation filter (2).
Figure 2 shows a photograph of a plate containing the product obtained after exposure to a temperature of 40°C in an air-circulation oven (Example 1).
Figure 3 shows a photomicrograph of the nanoencapsulated product obtained (Example 1).
Figure 4 shows a DSC curve for 3 consecutive heating and cooling cycles with the respective enthalpy of the nanoencapsulated product obtained (Example 1).
Figure 5 shows a photograph of a plate containing the product obtained after exposure to a temperature of 40°C in an air-circulation oven (Example 2).
Figure 6 shows a photomicrograph of the nanoencapsulated product obtained (Example 2).
Figure 7 shows consecutive scannings of dynamic turbidimetry (stability) of the nanoencapsulated product obtained (Example 2).
Figure 8 shows a photograph of a plate containing the product obtained after reaction, exposed to a temperature of 40°C in an air-circulation oven (Example 3).
Figure 9 shows a photomicrograph of the product obtained (Example 3).
Figure 10 shows a photograph of a plate containing the product obtained after reaction, exposed to a temperature of 40°C in an air-circulation oven (Example 4).
Figure 11 shows a photomicrograph of the nanoencapsulated product obtained (Example 4).
Figure 12 shows a photograph of a plate containing the product obtained after reaction, exposed to a temperature of 40°C in an air-circulation oven (Example 5).
Figure 13 shows a photomicrograph of the nanoencapsulated product obtained (Example 5).
Figure 14 shows consecutive scannings of dynamic (stability) turbidimetry of the nanoencapsulated product (Example 5).
Figure 15 shows a photograph of a plate containing the product after reaction, exposed to a temperature of 40°C in an air-circulation oven (Example 6).
Figure 16 shows a photomicrograph of the nanoencapsulated product (Example 6).
Figure 17 shows consecutive scannings of dynamic turbidimetry (stability) of the nanoencapsulated product (Example 6).
Figure 18 shows a photograph of a plate containing the product obtained after reaction, exposed to a temperature of 40°C in an air-circulation oven (Example 7).
Figure 19 shows a photomicrograph of the nanoencapsulated product obtained (Example 7).
Figure 20 shows a DSC curve showing 20 consecutive heating and cooling cycles of the nanoencapsulated product obtained (Example 7).
Figure 21 shows the spectrum of transfer of the NTRA samples obtained in Example 2 as compared with the conventional PCM (Example 8).

### DETAILMENT OF THE INVENTION

The present process for producing a nanoencapsulated temperature regulating agent (artn/ntra) via interfacial polymerization is an approach to the production of thermal regulating systems without using electric energy, that is to say, employing mechanisms of melting/solidifying materials for heat exchange and also using materials that promote reflection of infrared radiation, responsible for heating up or cooling objects, surfaces or bodies.

The production of NTRA comprises carrying out six consecutive processing steps, which enable the generation of the nanoencapsulates of interest, namely:
- step a) generating the organic phase constituted by the organic material with melting/solidifying point of interest, colloidal oxide nanoparticle and a solvent, the inclusion of the colloidal oxide nanoparticle being optional;
- step b) pre-emulsifying the organic phase in a solution of water and emulsifiers;
- step c) diffusing this pre-emulsion in an aqueous phase containing emulsifiers;
- step d) distilling the solvents;
- step e) polymerizing and forming the shell of the nanoencapsulate; and optionally
- step f) drying the product.

The preparation of the organic phase - OP, step a), is carried out by mechanical (preferably) or magnetic stirring of the inputs and generates a dispersion that contains simultaneously the solvent, a non-ionic emulsifier, the organic material, a protective colloid, colloidal oxide nanoparticles, and the monomer that forms the shell being, therefore, in the form of a colloidal suspension. It should be noted that the inclusion of the colloidal-oxide nanoparticles is optional.

The stirring, at a velocity ranging from 10 to 1,000 rpm, preferably 400 rpm, at a temperature ranging from 5 to 90°C, preferably 25°C, is carried out for the necessary time until complete solubilization of the organic material and dispersion of the colloidal oxide nanoparticles, when present, is reached.

The solvent used should exhibit partial solubility in water with values of up to 20% by mass and a boiling point lower than that of water, and it may be of the family of acetates, preferably ethyl acetate. The organic material responsible for the process of absorbing or releasing heat by melting/solidification may be wax, butter, paraffin, salt or soluble polymer, or blends of these materials having melting/solidifying point ranging from 10 to 120°C, preferably from 29 to 32°C. The colloidal oxide to be used shall have average particle size lower than 200 nm, preferably lower than 50 nm.

The colloidal oxide may be based on titanium or zinc, preferably zinc. The monomer to be used in forming the shell and generation of the NTRA shall be of the cyanoacrylate type, preferably butylcyanoacrylate type. The non-ionic emulsifier and the protective colloid may be the poly(ethylene oxide) derivatives. The mass ratio between the organic material / colloidal oxide nanoparticle / monomer may range from 47: 35: 16 and 92: 0.01: 7.99, preferably 73: 15: 12. The contents of active material (organic material) present in the organic phase may range from 12 to 35%, preferably 28% by mass.

Step b), which comprises the preparation of the NTRA, consists in pre-emulsifying the organic phase - OP in an aqueous phase containing emulsifiers (FA-1). The emulsifiers may be of the anionic, cationic, non-ionic or amphiphilic type, preferably an anionic, the anionic ones being sulfated organic compounds.

The pre-emulsification is carried out by stirring, preferably mechanical stirring, of the organic phase in the aqueous phase (FA1) in the emulsifier/water ratio of 0.1: 9.9 to 1:1, preferably 1:9 by mass at a velocity ranging from 100 to 30,000 rpm, preferably 7,000 rpm, for the time necessary until completion of the emulsification at a temperature ranging from 10 to 80°C, preferably at room temperature, the ratio between the organic and aqueous phases being of 8 to 0.2 by mass, preferably 2.5.

Step c) is carried out by diluting the pre-emulsion generated (FA-1) in the preceding phase, making the diffusion of the solvents in water possible. This dilution is carried out by adding water, under stirring, which may range from 100 to 30,000 rpm, preferably at a speed of 7,000 rpm, for a time necessary until complete dilution is achieved. The ratio of dilution of the pre-emulsion with water may range from 10 to 0.5, preferably 2.0 by mass.

After dilution, the method foresees a step d) of removing the solvent by distillation or filtration, keeping the aqueous dispersion to obtain a product in the form of a colloidal dispersion in an aqueous medium. The dispersion is kept under stirring from 10 to 7,000 rpm, preferably 250 rpm, at a temperature ranging from 25 to 90°C, preferably 50°C, for a period of time sufficient to remove the solvent that may range from 1 to 4 hours, preferably 1 hour.

Then, step e), of polymerizing and forming the shell of the nanoencapsulate, in which the dispersion remains under stirring of 10 to 7,000 rpm, preferably 250 rpm, at a temperature ranging from 25 to 90°C, preferably 50°C, for a period of time to stabilize the system ranging from 1 to 4 hours, preferably 2 hours, is carried out.

Optionally, a drying step f), if the aqueous dispersion of the NTRAs is subjected to a drying process like spray-drying, fluidized bed drying, filtration, lyophilization, centrifugation, among others, can be carried out.

The product generated in this invention exhibits the following characteristics: average particle size ranging from 70 to 1500 nm, preferably 250 nm, the pH ranging from 3.0 to 8.0, preferably 4.2; solid contents from 5.0 to 50.0%, preferably 34%, spherical morphology and, when dried, it exhibits a powder aspect, either partly agglomerated or in the form of dispersed particles, and being easy to redisperse in an aqueous medium.

As an embodiment of the invention "A PROCESS FOR PRODUCING NANOENCAPSULATED TEMPERATURE REGULATING AGENT (NTRA) VIA INFERFACIAL POLYMERIZATION", a few examples are given hereinafter. The products generated in the examples were characterized for the average particle size, zeta potential, morphology, pH, colloidal physical stability and total solid contents.

### EXAMPLES

### EXEMPLO 1: Production of Nanoencapsulated Temperature Regulating Agent containing ratio of 80% / 13% / 7% by mass of organic material / monomer / colloidal oxide.

In a jacketed glass reactor with bottom outlet, one added 12 g ethyl acetate, 1.7 g sorbitan laureate (80 moles of ethylene oxide), 2 g poly(ethylene oxide) - poly(propylene oxide) - poly(ethylene oxide) triblock copolymer and 12 g fatty acid triglycerides of vegetable origin. This system remained 10 minutes under stirring at 200 rpm at a temperature of 50°C. After the wax had molten, 1 g of zinc oxide dispersed in 10 g of ethyl acetate was added under stirring in ultra-sound for 10 minutes and 2g Butylcyanoacrylate was added with stirring for 1 minute, giving rise to the organic phase - OP. In parallel, two aqueous phases were prepared to carry out the pre-emulsification and dilution of the pre-emulsion formed. The aqueous phase used in the pre-emulsification (FA-1) was prepared with 17 g distilled water, 1.5 g lauryl ether sodium sulfate (LESS) and 1.5 g ethyl acetate; and the second aqueous phase to be used in the dilution of the pre-emulsion (FA-2) was constituted only by 50 g distilled water. To complete the dissolution of the FA-1, the system was left under stirring at 200 rpm at a temperature of 50°C for 5 minutes.

The pre-emulsion was prepared with slow addition of the organic phase - OP in FA-1 under mechanical stirring of 7,000 rpm and at room temperature, for about 10 minutes, then FA-2 was added and the material was transferred to the jacketed glass reactor and equipped with a distillation condenser, thermostated bath, mechanical stirring, vacuum pump and distillate collection balloon.

The procedure of distilling the solvent was carried out in the following conditions: temperature of 50°C, stirring at 280 rpm and negative pressure of 380 mmHg for 1 hour. After distillation, the formulation was kept in reactor for 2 more hours.

The nanoencapsulated product obtained was subjected to characterization of particle size by the dynamic light scattering technique, pH by potentiometry, morphology by the scanning electron microscopy, the total solid contents by the thermogravimetric technique and thermal analysis by differential scanning calorimetry (DSC).

Table 1 shows the results of average particle size, pH, total solid contents. As can be observed, the solid content was in the order of 33.3% by mass, the average particle size was of 171.6 nm and the pH was of 0.8.

**Table 1: Results achieved with the product produced according the experimental conditions of Example 1**

| Total solid contents (% m/m) | pH | Average particle size (nm) |
|---|---|---|
| 33.3 | 8.0 | 171.6 |

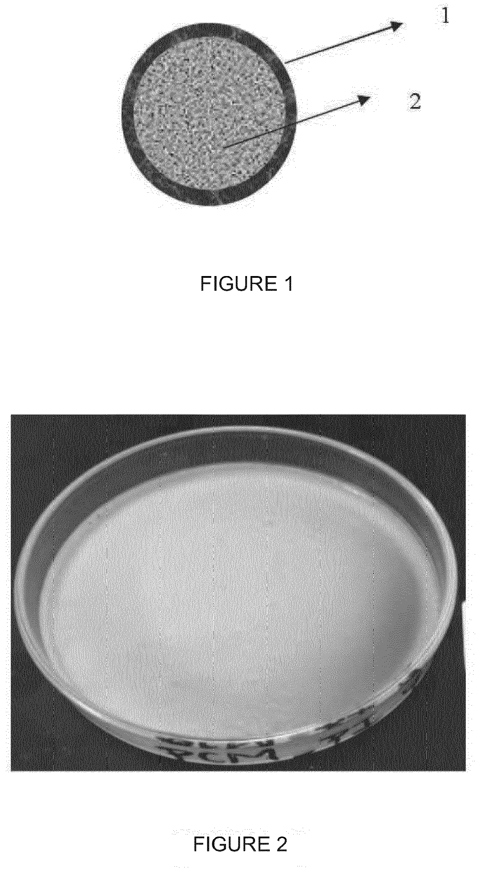

Figure 2 shows a photograph of a plate containing the product after reaction, exposed to a temperature of 40°C in an air-circulation oven. As can be observed, the aspect of the sample is "dry", that is, without the presence of molten organic material, which undergoes melting at the temperature of 32°C, indicating that it was nanoencapsulated by the interfacial polymerization process.

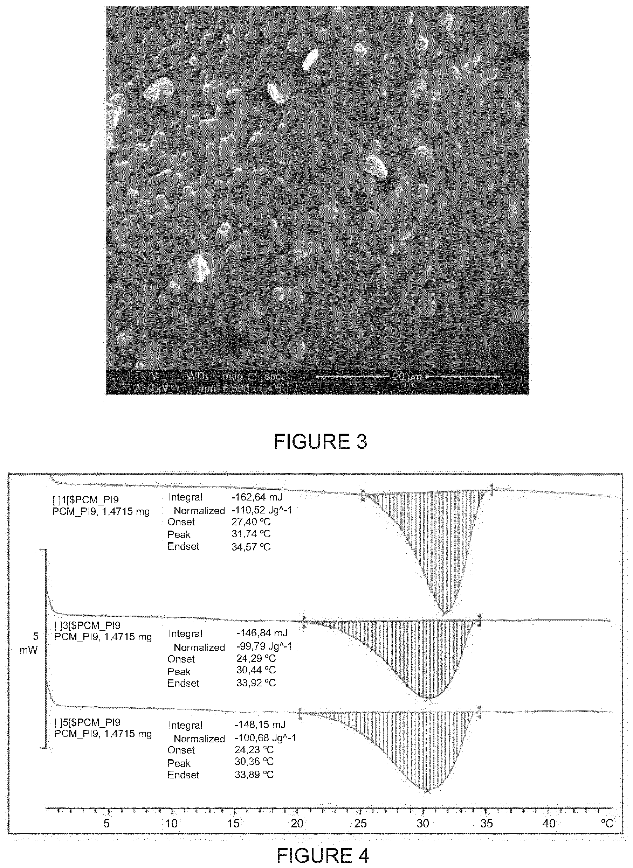

Figure 3 shows a photomicrograph of the nanoencapsulated and, as can be observed, the particle size was on nanometric order.

Figure 4 shows the DSC curve for the nanoencapsulate sample, presenting consecutive heating and cooling cycles and evidencing that the melting enthalpy of the material does not undergo significant alterations, proving that the nanocapsules show a cyclic effect of energy absorption.

### EXAMPLE 2: Production of Nanoencapsulated Temperature Regulating Agent containing ratio of 73% / 12% / 15% by mass of organic material / monomer / colloidal oxide.

In a jacketed glass reactor with bottom outlet, one added 12g ethyl acetate, 1.7 g sorbitan laureate (80 moles of ethylene oxide), 2 g poly(ethylene oxide) - poly(propylene oxide) - poly(ethylene oxide) triblock copolymer and 12 g fatty acid triglycerides of vegetable origin. This system remained 10 minutes under stirring at 200 rpm at a temperature of 50°C. After the wax had molten, 2.5g of zinc oxide dispersed in 10 g of ethyl acetate was added under stirring in ultra-sound for 10 minutes and 2g Butylcyanoacrylate was added with stirring for 1 minute, giving rise to the organic phase - OP. In parallel, two aqueous phases were prepared to carry out the pre-emulsification and dilution of the pre-emulsion formed. The aqueous phase used in the pre-emulsification (FA-1) was prepared with 17 g distilled water, 1.5 g lauryl ether sodium sulfate (LESS) and 1.5 g ethyl acetate; and the second aqueous phase to be used in the dilution of the pre-emulsion (FA-2) was constituted only by 50 g distilled water. To complete the dissolution of the FA-1, the system was left under stirring at 200 rpm at a temperature of 50°C for 5 minutes.

The pre-emulsion was prepared with slow addition of the organic phase - OP in FA-1 under mechanical stirring of 7,000 rpm and at room temperature, for about 10 minutes, then the FA-2 was added and the material was transferred to the jacketed glass reactor and equipped with a distillation condenser, thermostated bath, mechanical stirring, vacuum pump and distillate collection balloon.

The procedure of distilling the solvent was carried out in the following conditions: temperature of 50°C, stirring at 280 rpm and negative pressure of 440 mmHg for 40 minutes. After distillation, the formulation was kept in reactor for 2 more hours.

The nanoencapsulated product obtained was subjected to characterization of particle size by the dynamic light scattering technique, pH by potentiometry, morphology by the scanning electron microscopy, colloidal physical stability by the dynamic scanning turbidimetry technique, and the total solid contents by the thermogravimetry.

Table 2 shows the results of average particle size, pH, total solid contents. As can be observed, the solid content was on the order of 33.8% by mass, the average particle size was of 253.8 nm and the pH was of 8.2.

**Table 2: Results achieved with the product produced according the experimental conditions of Example 2**

| Total solid contents (% m/m) | pH | Average particle size (nm) |
|---|---|---|
| 33.8 | 8.2 | 253.8 |

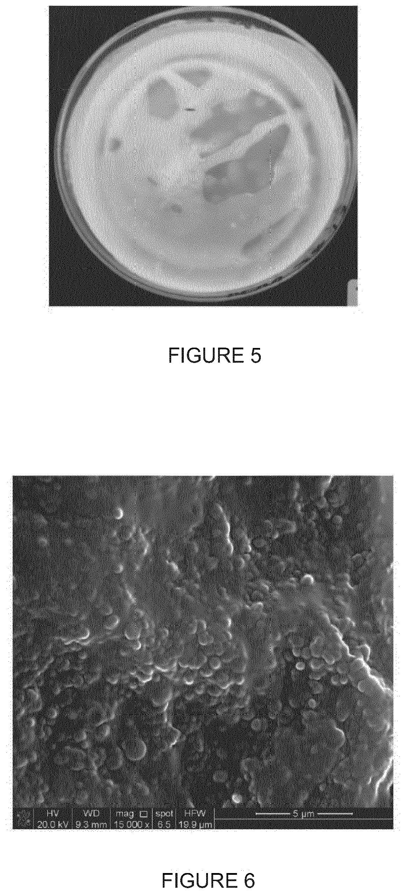

Figure 5 shows a photograph of a plate containing the product after reaction, exposed to a temperature of 40°C in an air-circulation oven. As can be observed, the aspect of the sample is "dry", that is, without the presence of molten organic material, which undergoes melting at the temperature of 32°C, indicating that it was nanoencapsulated by the interfacial polymerization process.

Figure 6 shows a photomicrograph of the nanoencapsulated and, as can be observed, the particle size was on nanometric order.

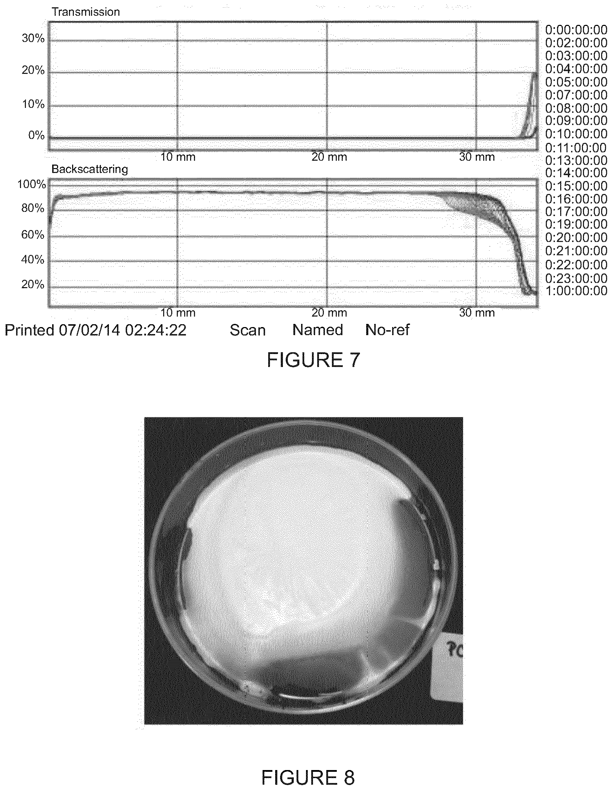

Figure 7 shows a dynamic turbidimetry image of the sample analyzed for a period of 24 consecutive hours after preparation of the sample, carrying out scanning throughout the height of the sample-holder every 1 hour. As can be seen, this evidences a colloidal physical stability behavior along the time, without difference in the retro light scattering of the sample for the times evaluated.

### EXAMPLE 3: Production of Nanoencapsulated Temperature Regulating Agent containing ratio of 57% / 19% / 24% by mass of organic material / monomer / colloidal oxide.

In a jacketed glass reactor with bottom outlet, one added 12g ethyl acetate, 1.7 g sorbitan laureate (80 moles of ethylene oxide), 2 g poly(ethylene oxide) - poly(propylene oxide) - poly(ethylene oxide) triblock copolymer and 6 g fatty acid triglycerides of vegetable origin. This system remained 10 minutes under stirring at 200 rpm at a temperature of 50°C. After the wax had molten, 2.5g of zinc oxide dispersed in 10 g of ethyl acetate was added under stirring in ultra-sound for 10 minutes and 2g Butylcyanoacrylate was added with stirring for 1 minute, giving rise to the organic phase - OP. In parallel, two aqueous phases were prepared to carry out the pre-emulsification and dilution of the pre-emulsion formed. The aqueous phase used in the pre-emulsification (FA-1) was prepared with 17 g distilled water, 1.5 g lauryl ether sodium sulfate (LESS) and 1.5 g ethyl acetate; and the second aqueous phase to be used in the dilution of the pre-emulsion (FA-2) was constituted only by 50 g distilled water. To complete the dissolution of the FA-1, the system was left under stirring at 200 rpm at a temperature of 50°C for 5 minutes.

The pre-emulsion was prepared with slow addition of the organic phase - OP in FA-1 under mechanical stirring of 7,000 rpm and at room temperature, with time of about 10 minutes, then FA-2 was added and the material was transferred to the jacketed glass reactor and equipped with a distillation condenser, thermostated bath, mechanical stirring, vacuum pump and distillate collection balloon.

The procedure of distilling the solvent was carried out in the following conditions: temperature of 50°C, stirring at 280 rpm and negative pressure of 440 mmHg for 40 minutes. After distillation, the formulation was kept in reactor for 2 more hours and 20 minutes.

The nanoencapsulated product obtained was subjected to characterization of particle size by the dynamic light scattering technique, pH by potentiometry, morphology by the scanning electron microscopy, and the total solid contents by the thermogravimetry technique.

Table 3 shows the results of average particle size, pH, total solid contents. As can be observed, the solid content was on the order of 33.8% by mass, the average particle size was of 281.0 nm and the pH was of 8.3.

**Table 3: Results achieved with the product produced according the experimental conditions of Example 3**

| Total solid contents (% m/m) | pH | Average particle size (nm) |
|---|---|---|
| 33.8 | 8.3 | 281.0 |

Figure 8 shows a photograph of a plate containing the product after reaction, exposed to a temperature of 40°C in an air-circulation oven. As can be observed, the aspect of the sample is "dry", that is, without the presence of molten organic material, which undergoes melting at the temperature of 32°C, indicating that it was nanoencapsulated by the interfacial polymerization process.

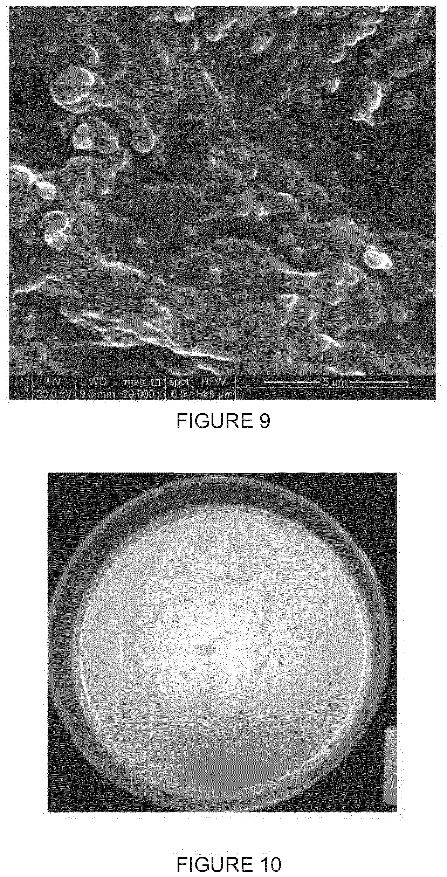

Figure 9 shows a photomicrograph of the nanoencapsulated and, as can be observed, the particle size was on nanometric order.

### EXAMPLE 4: Production of Nanoencapsulated Temperature Regulating Agent containing ratio of 80% / 9% / 11% by mass of organic material / monomer / colloidal oxide.

In a jacketed reactor with bottom outlet, one added 12g ethyl acetate, 1.7 g sorbitan laureate (80 moles of ethylene oxide), 2 g poly(ethylene oxide) - poly(propylene oxide) - poly(ethylene oxide) triblock copolymer and 18 g fatty acid triglycerides of vegetable origin. This system remained 10 minutes under stirring at 200 rpm at a temperature of 50°C. After the wax had molten, 2.5g of sigma zinc oxide dispersed in 10 g of ethyl acetate was added under stirring in ultra-sound for 10 minutes and 2g Butylcyanoacrylate was added with stirring for 1 minute, giving rise to the organic phase - OP. In parallel, two aqueous phases were prepared to carry out the pre-emulsification and dilution of the pre-emulsion formed. The aqueous phase used in the pre-emulsification (FA-1) was prepared with 17 g distilled water, 1.5 g lauryl ether sodium sulfate (LESS) and 1.5 g ethyl acetate; and the second aqueous phase to be used in the dilution of the pre-emulsion (FA-2) was constituted only by 50 g distilled water. To complete the dissolution of the FA-1, the system was left under stirring at 200 rpm at a temperature of 50°C for 5 minutes.

The pre-emulsion was prepared with slow addition of the organic phase - OP in FA-1 under mechanical stirring of 7,000 rpm and at room temperature, for about 10 minutes, then the FA-2 was added and the material was transferred to the jacketed glass reactor and equipped with a distillation condenser, thermostated bath, mechanical stirring, vacuum pump and distillate collection balloon.

The procedure of distilling the solvent was carried out in the following conditions: temperature of 50°C, stirring at 280 rpm and negative pressure of 440 mmHg for 40 minutes. After distillation, the formulation was kept in reactor for 2 more hours and 20 minutes.

The nanoencapsulated product obtained was subjected to characterization of particle size by the dynamic light scattering technique, pH by potentiometry, morphology by the scanning electron microscopy, and the total solid contents by the thermogravimetry technique.

Table 4 shows the results of average particle size, pH, total solid contents. As can be observed, the solid content was on the order of 36.4% by mass, the average particle size was of 244.3 nm and the pH was of 8.3.

**Table 4: Results achieved with the product produced according the experimental conditions of Example 4**

| Total solid contents (% m/m) | pH | Average particle size (nm) |
|---|---|---|
| 36.4 | 8.3 | 244.3 |

Figure 10 shows a photograph of a plate containing the product after reaction, exposed to a temperature of 40°C in an air-circulation oven. As can be observed, the aspect of the sample is "dry", that is, without the presence of molten organic material, which undergoes melting at the temperature of 32°C, indicating that it was nanoencapsulated by the interfacial polymerization process.

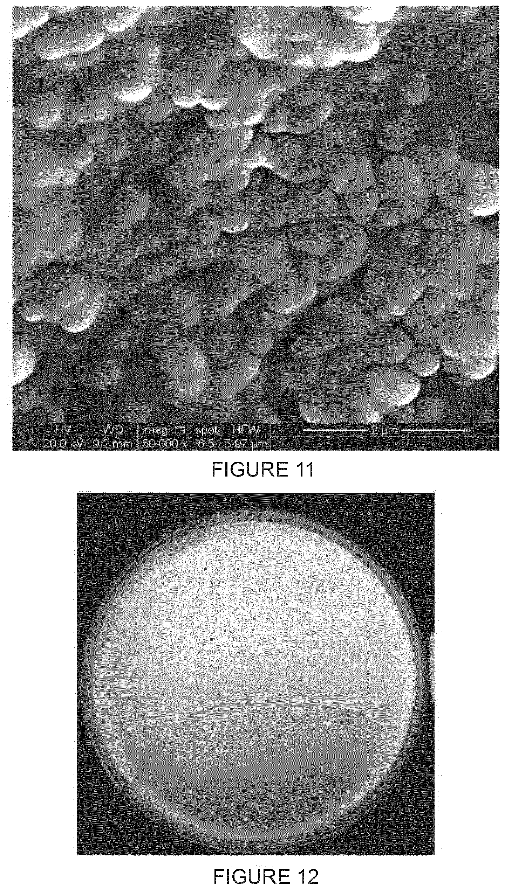

Figure 11 shows a photomicrograph of the nanoencapsulated and, as can be observed, the particle size was on nanometric order.

### EXAMPLE 5: Production of Nanoencapsulated Temperature Regulating Agent containing ratio of 52% / 30% / 18% by mass of organic material / monomer / colloidal oxide.

In a jacketed glass reactor with bottom outlet, one added 17g ethyl acetate, 1.7 g sorbitan laureate (80 moles of ethylene oxide), 2 g poly(ethylene oxide) - poly(propylene oxide) - poly(ethylene oxide) triblock copolymer and 6 g fatty acid triglycerides of vegetable origin. This system remained 10 minutes under stirring at a temperature of 50°C. After the wax had molten, 3.5g of zinc oxide dispersed in 10 g of ethyl acetate was added under stirring in ultra-sound for 10 minutes and 2g Butylcyanoacrylate was added with stirring for 1 minute, giving rise to the organic phase - OP. In parallel, two aqueous phases were prepared to carry out the pre-emulsification and dilution of the pre-emulsion formed. The aqueous phase used in the pre-emulsification (FA-1) was prepared with 17 g distilled water, 1.5 g lauryl ether sodium sulfate (LESS) and 1.5 g ethyl acetate; and the second aqueous phase to be used in the dilution of the pre-emulsion (FA-2) was constituted only by 50 g distilled water. To complete the dissolution of the FA-1, the system was left under stirring at 200 rpm at a temperature of 50°C for 5 minutes.

The pre-emulsion was prepared with slow addition of the organic phase - OP in FA-1 under mechanical stirring of 7,000 rpm and at room temperature, for about 10 minutes, then the FA-2 was added and the material was transferred to the jacketed glass reactor and equipped with a distillation condenser, thermostated bath, mechanical stirring, vacuum pump and distillate collection balloon.

The procedure of distilling the solvent was carried out in the following conditions: temperature of 50°C, stirring at 280 rpm and negative pressure of 380 mmHg for 1 hour. After distillation, the formulation was kept in reactor for 2 more hours.

The nanoencapsulated product obtained was subjected to characterization of particle size by the dynamic light scattering technique, pH by potentiometry, morphology by the scanning electron microscopy, colloidal physical stability by the turbidimetry scanning technique, and the total solid contents by the thermogravimetry technique.

Table 5 shows the results of average particle size, pH, total solid contents. As can be observed, the solid content was on the order of 29.36% by mass, the average particle size was of 226.8 nm and the pH was of 8.3.

**Table 5: Results achieved with the product produced according the experimental conditions of Example 1**

| Total solid contents (% m/m) | pH | Average particle size (nm) |
|---|---|---|
| 29.36 | 8.3 | 226.8 |

Figure 12 shows a photograph of a plate containing the product after reaction, exposed to a temperature of 40°C in an air-circulation oven. As can be observed, the aspect of the sample is "dry", that is, without the presence of molten organic material, which undergoes melting at the temperature of 32°C, proving that it was nanoencapsulated by the interfacial polymerization process.

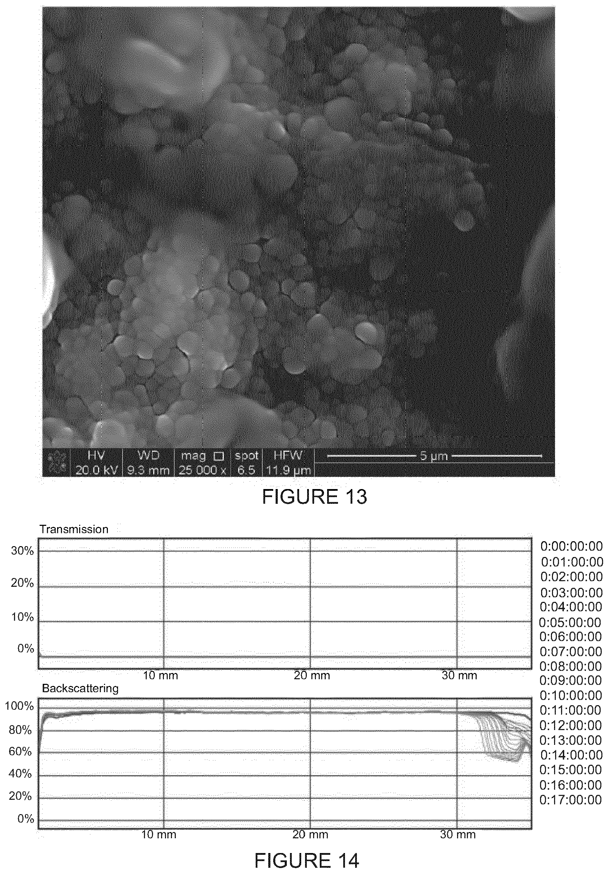

Figure 13 shows a photomicrograph of the nanoencapsulates and, as can be observed, the particle size was on nanometric order.

Figure 14 shows a dynamic turbidimetry image of the sample, analyzed for a period of 17 consecutive hours after preparation thereof, with scanning throughout the height of the sample-holder every 1 hour. As can be observed, this evidences the colloidal physical stability behavior along the time, without difference in the retro-light scattering of the sample for the times evaluated.

### EXAMPLE 6: Production of Nanoencapsulated Temperature Regulating Agent containing ratio of 48% / 36% / 16% by mass of organic material / monomer / colloidal oxide

In a jacketed glass reactor with bottom outlet, one added 10g ethyl acetate, 1.7 g sorbitan laureate (80 moles of ethylene oxide), 2 g poly(ethylene oxide) - poly(propylene oxide) - poly(ethylene oxide) triblock copolymer and 6 g fatty acid triglycerides of vegetable origin. This system remained 10 minutes under stirring at 200 rpm at a temperature of 50°C. After the wax had molten, 4.5g of zinc oxide dispersed in 21 g of ethyl acetate was added under stirring in ultra-sound for 10 minutes and 2g Butylcyanoacrylate was added with stirring for 1 minute, giving rise to the organic phase - OP. In parallel, two aqueous phases were prepared to carry out the pre-emulsification and dilution of the pre-emulsion formed. The aqueous phase used in the pre-emulsification (FA-1) was prepared with 17 g distilled water, 1.5 g lauryl ether sodium sulfate (LESS) and 1.5 g ethyl acetate; and the second aqueous phase to be used in the dilution of the pre-emulsion (FA-2) was constituted only by 50 g distilled water. To complete the dissolution of the FA-1, the system was left under stirring at 200 rpm at a temperature of 50°C for 5 minutes.

The pre-emulsion was prepared with slow addition of the organic phase - OP in FA-1 under mechanical stirring of 7,000 rpm and at room temperature, for about 10 minutes, then the FA-2 was added and the material was transferred to the jacketed glass reactor and equipped with a distillation condenser, thermostated bath, mechanical stirring, vacuum pump and distillate collection balloon.

The procedure of distilling the solvent was carried out in the following conditions: temperature of 50°C, stirring at 280 rpm and negative pressure of 380 mmHg for 1 hour. After distillation, the formulation was kept in reactor for 2 more hours.

The nanoencapsulated product obtained was subjected to characterization of particle size by the dynamic light scattering technique, pH by potentiometry, morphology by the scanning electron microscopy, colloidal physical stability by the dynamic scanning turbidimetry technique, and the total solid contents by the thermogravimetry technique.

Table 6 shows the results of average particle size, pH, total solid contents. As can be observed, the solid content was on the order of 31.21% by mass, the average particle size was of 266.0 nm and the pH was of 8.21.

**Table 6: Results achieved with the product produced according the experimental conditions of Example 1**

| Total solid contents (% m/m) | pH | Average particle size (nm) |
|---|---|---|
| 31.21 | 8.21 | 266.0 |

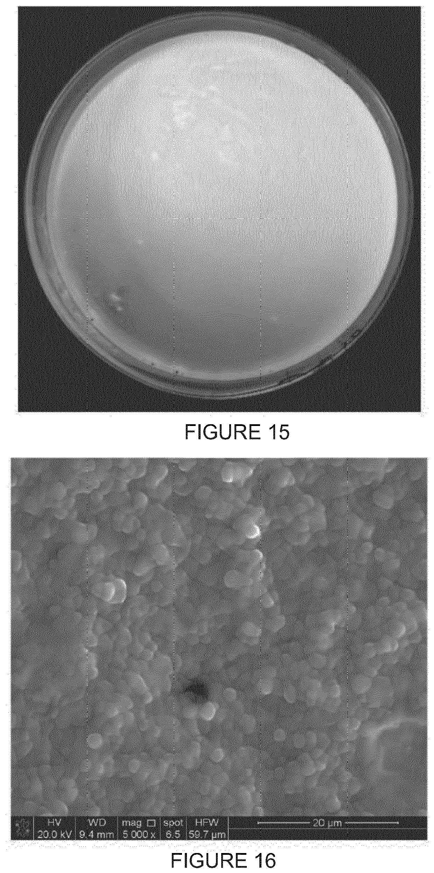

Figure 15 shows a photograph of a plate containing the product after reaction, exposed to a temperature of 40°C in an air-circulation oven. As can be observed, the aspect of the sample is "dry", that is, without the presence of molten organic material, which undergoes melting at the temperature of 32°C, proving that it was nanoencapsulated by the interfacial polymerization process.

Figure 16 shows a photomicrograph of the nanoencapsulated and, as can be observed, the particle size was on nanometric order.

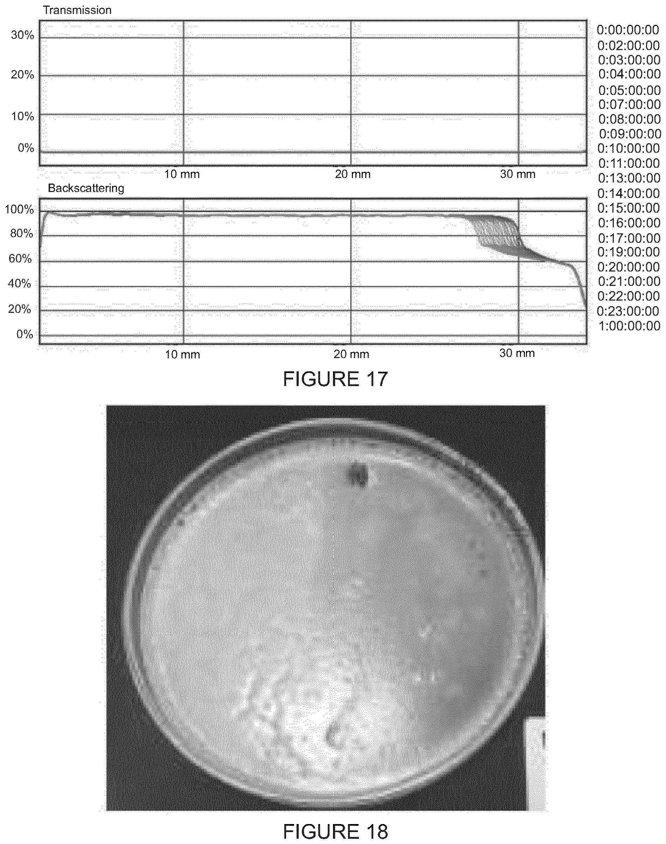

Figure 17 shows a dynamic turbidimetry image of the sample, analyzed for a period of 24 consecutive hours after preparation thereof, with scanning throughout the height of the sample-holder every 1 hour. As can be observed, this evidences a colloidal physical stability behavior along the time, without difference in the retro-light scattering of the sample for the times evaluated.

### EXAMPLE 7: Production of Nanoencapsulated Temperature Regulating Agent containing ratio of 48% / 36% / 16% by mass of organic material / monomer / colloidal oxide

In a jacketed glass reactor with bottom outlet, one added 12g ethyl acetate, 1.7 g sorbitan laureate (80 moles of ethylene oxide), 2 g poly(ethylene oxide) - poly(propylene oxide) - poly(ethylene oxide) triblock copolymer and 12 g fatty acid triglycerides of vegetable origin. This system remained 10 minutes under stirring at 200 rpm at a temperature of 50°C. After the wax had molten, 1.0g of zinc oxide dispersed in 10 g of ethyl acetate was added under stirring in ultra-sound for 10 minutes and 2g Butylacyanacrylate was added with stirring for 1 minute, giving rise to the organic phase - OP. In parallel, two aqueous phases were prepared to carry out the pre-emulsification and dilution of the pre-emulsion formed. The aqueous phase used in the pre-emulsification (FA-1) was prepared with 17 g distilled water, 1.5 g lauryl ether sodium sulfate (LESS) and 1.5 g ethyl acetate; and the second aqueous phase to be used in the dilution of the pre-emulsion (FA-2) was constituted only by 50 g distilled water. To complete the dissolution of the FA-1, the system was left under stirring at 200 rpm at a temperature of 50°C for 5 minutes.

The pre-emulsion was prepared with slow addition of the organic phase - OP in FA-1 under mechanical stirring of 7,000 rpm and at room temperature, for about 10 minutes, then one added the FA-2 and the material was transferred to the jacketed glass reactor and equipped with a distillation condenser, thermostated bath, mechanical stirring, vacuum pump and distillate collection balloon.

The procedure of distilling the solvent was carried out in the following conditions: temperature of 50°C, stirring at 280 rpm and negative pressure of 380 mmHg for 1 hour. After distillation, the formulation was kept in reactor for 2 more hours.

The nanoencapsulated product obtained was subjected to characterization of particle size by the dynamic light scattering technique, pH by potentiometry, morphology by the scanning electron microscopy, colloidal physical stability by the dynamic scanning turbidimetry technique, and the total solid contents by the thermogravimetry technique.

Table 7 shows the results of average particle size, pH, total solid contents. As can be observed, the solid content was on the order of 31.89% by mass, the average particle size was of 226.6 nm and the pH was of 7.9.

**Table 7: Results achieved with the product produced according the experimental conditions of Example 1**

| Total solid contents (% m/m) | pH | Average particle size (nm) |
|---|---|---|
| 31.89 | 7.9 | 226.6 |

Figure 18 shows a photograph of a plate containing the product after reaction, exposed to a temperature of 40°C in an air-circulation oven. As can be observed, the aspect of the sample is "dry", that is, without the presence of molten organic material, which undergoes melting at the temperature of 32°C, proving that it was nanoencapsulated by the interfacial polymerization process.

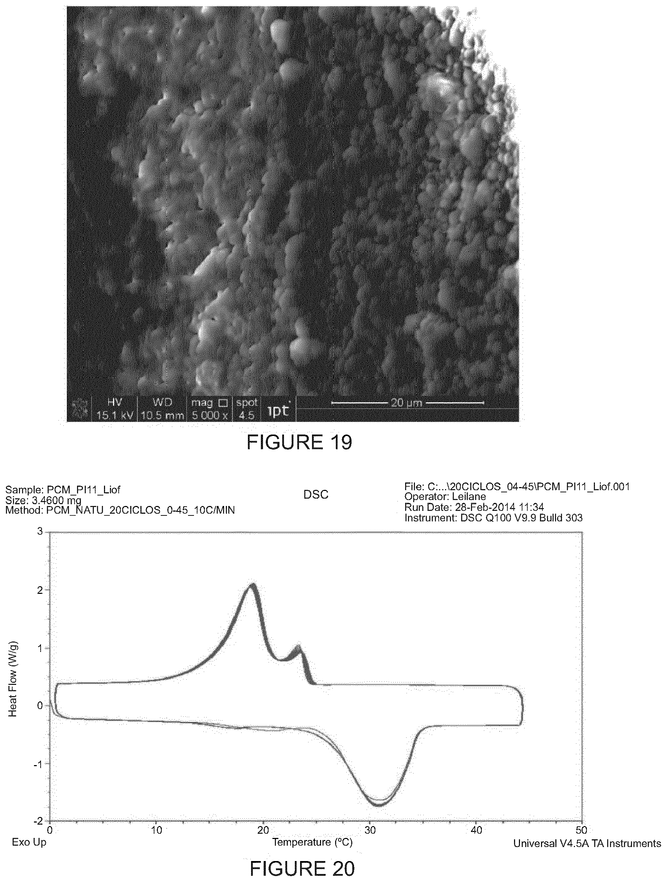

Figure 19 shows a photomicrograph of the nanoencapsulated and, as can be observed, the particle size was on nanometric order.

Figure 20 shows the DSC curve for the sample of the nanoencapsulate presenting 20 consecutive heating and cooling cycles, this evidencing that the melting enthalpy of the material does not undergo significant alterations, the nanocapsules presenting a cyclic effect of energy absorption.

### EXAMPLE 8: The evaluation of the efficiency of the NTRA obtained in blocking infrared radiation

In order to demonstrate the potential of the NTRA to block infrared radiation, a study of transmittance of this radiation by a film containing the NTRA was carried out and a second one containing conventional PCM, that is, without the presence of colloidal oxide which reflects the radiation. For carrying out this study, the products obtained in EXAMPLE 02 were used and a conventional PCM obtained in parallel to this invention, only to demonstrate the desired effect. The formation of the films of the materials was achieved on a zinc selenide plate at the temperature of 40°C and then led to incidence of infrared radiation, employing infrared spectroscopy equipment with Fourrier transform.

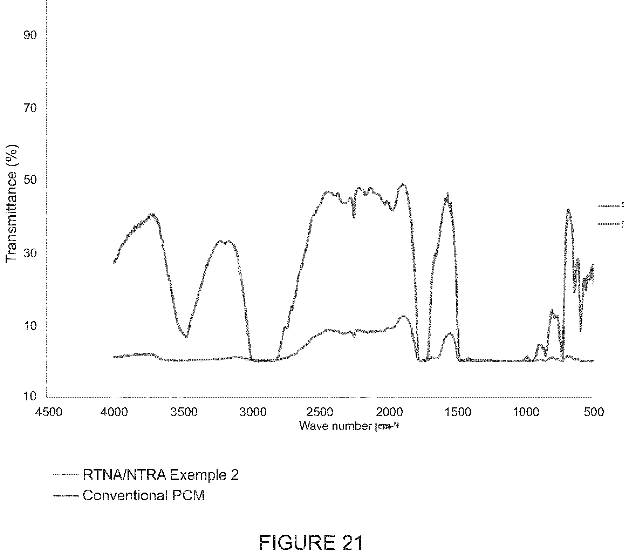

Figure 21 shows an overlapping of the infrared spectra obtained in transmittance mode through the films of the evaluated materials. As can be observed, the NTRA blocked virtually all the infrared radiation, whereas the conventional PCM blocked only 50% of the radiation. This result demonstrates the production of an NTRA with capability of blocking infrared radiation and, as a result, modifying the heating profile of any surface on which it is applied.

## Claims

1. A process for producing nanoencapsulated temperature regulating agent (NTRA) via interfacial polymerization, **characterized by** comprising the steps of:
(a) solubilizing the organic material and dispersing the colloidal oxide nanoparticles in a solvent, called organic phase;
(b) pre-emulsifying the organic phase in a solution of water and emulsifiers;
(c) diffusing this pre-emulsion in an aqueous phase containing emulsifiers;
(d) distilling the solvents;
(e) polymerizing the monomer and forming the shell of the nanoencapsulates; and
(f) optionally drying.

2. The process for producing nanoencapsulated temperature regulating agent (NTRA) via interfacial polymerization according to claim 1, **characterized in that** the preparation of the organic phase - OP or step a) is carried out by mechanically or magnetically stirring the inputs and generating a dispersion in the form of a colloidal suspension containing simultaneously the solvent, a non-ionic emulsifier, the organic material, a protective colloid, colloidal-oxide nanoparticles, and the shell forming monomer, the stirring taking place at a velocity ranging from 10 to 1,000 rpm, at a temperature ranging from 5 to 90°C, for the time necessary until complete solubilization of the organic material and dispersion of the colloidal-oxide nanoparticles; the solvent used exhibiting partial solubility in water of up to 20% by mass and boiling point lower than that of water; the organic material responsible for the process of absorbing or releasing heat by melting/solidifying having melting/solidifying point ranging from 10 to 120°C; the colloidal oxide having average particle size smaller than 200 nm; the monomer used in forming the shell and generating the NTRA being of the cyanoacrylate type; the non-ionic emulsifier and the protective colloid being poly(ethylene oxide) derivatives; the mass ratio between the organic material / colloidal-oxide particle / monomer ranging from 47 : 35 : 16 to 92 : 0.01 : 7.99, and the active material contents in the organic phase ranging from 12 to 35% by mass.

3. The process for producing nanoencapsulated temperature regulating agent (NTRA) via interfacial polymerization according to claim 2, **characterized in that** the inclusion of colloidal oxide is optional;

4. The process for producing nanoencapsulated temperature regulating agent (NTRA) via interfacial polymerization according to claim 2, **characterized in that** the preparation of the organic phase - OP or step a) is carried out by mechanically stirring the inputs and generating a dispersion in the form of a colloidal suspension that simultaneously contains the solvent, a non-ionic emulsifier, the organic material, the protective colloid, colloidal-oxide manoparticles, and the shell forming monomer, the stirring taking place at a velocity of 400 rpm, at a temperature of 25°C, for the time necessary until complete solubilization of the organic material and dispersion of the colloidal oxide nanoparaticles; the organic material responsible for the process of absorbing or releasing heat by melting/solidifying having melting/solidifying point ranging from 29 to 32°C; the colloidal oxide having average particle size smaller than 50 nm; the monomer used in forming the shell and generating the NTRA being butylcyanoacrylate; the mass ratio between organic material / colloidal-oxide nanoparticle / monomer being 73 : 15 : 12 and the active material contents in the organic phase being 28% by mass.

5. The process for producing nanoencapsulated temperature regulating agent (NTRA) via interfacial polymerization according to claim 1, **characterized in that** the step b) consists in pre-emulsifying the organic phase - OP in an aqueous phase containing emulsifiers (FA-1) of the anionic, cationic, non-ionic or amphiphilic type; the pre-emulsification being carried out by stirring the organic phase in the aqueous phase (FA-1) in the emulsifier/water ratio of 0.1 : 9.9 to 1 : 1 by mass, at a velocity ranging from 100 to 30,000 rpm, for the time necessary until complete emulsification, at a temperature ranging from 10 to 80°C, the ratio between the organic phase and the aqueous phase being of 8 to 0.2 by mass.

6. The process for producing nanoencapsulated temperature regulating agent (NTRA) via interfacial polymerization according to claim 5, **characterized in that** step b) consists in pre-emulsifying the organic phase - OP in an aqueous phase (FA-1) containing anionic organic emulsifiers or sulfated organic compounds; it being carried out by mechanical stirring of the organic phase in the aqueous phase (FA-1) at the emulsifier/water ratio of 1 : 9 by mass at a velocity of 7,000 rpm, for the time necessary until completion emulsification at room temperature, the ratio between the organic phase and the aqueous phase being of 2.5 by mass.

7. The process for producing nanoencapsulated temperature regulating agent (NTRA) via interfacial polymerization according to claim 1, **characterized in that** the step c) is carried out by diluting the pre-emulsion generated in the preceding phase with addition of water in the dilution ratio of 10 to 0.5 by mass, under stirring of 100 to 30,000 rpm for the time necessary until complete dilution.

8. The process for producing nanoencapsulated temperature regulating agent (NTRA) via interfacial polymerization according to claim 7, **characterized in that** step c) is carried out by diluting the pre-emulsion generated in the preceding phase with addition of water at the dilution ratio of 2.0 by mass under stirring of 7,000 rpm.

9. The process for producing nanoencapsulated temperature regulating agent (NTRA) via interfacial polymerization according to claim 1, **characterized in that** step d) of removing the solvent is carried out by distillation or filtration, keeping the aqueous dispersion, in order to obtain a product in the form of a colloidal dispersion in an aqueous medium.

10. The process for producing nanoencapsulated temperature regulating agent (NTRA) via interfacial polymerization according to claim 1, **characterized by** a step e), where the dispersion is kept under stirring from 10 to 7,000 rpm at a temperature ranging from 25 to 90°C for the period of time to remove the solvent ranging from 1 to 4 hours, and stirring for stabilization of the system ranging from 1 to 4 hours.

11. The process for producing nanoencapsulated temperature regulating agent (NTRA) via interfacial polymerization according to claim 10, **characterized by** a step e) where the dispersion if kept under stirring of 250 rpm at a temperature of 50°C for a period of time to remove the solvent of 1 hour, and stirring for stabilization of the system for 2 hours.

12. The process for producing nanoencapsulated temperature regulating agent (NTRA) via interfacial polymerization according to claim 1, **characterized by** optionally carrying out a step f) of drying by subjecting the aqueous dispersion of the NTRAs to a dying process.
